Europäisches Patentamt

European Patent Office

Office européen des brevets

(11) Veröffentlichungsnummer: **0 370 248**
**A1**

## (12) EUROPÄISCHE PATENTANMELDUNG

(21) Anmeldenummer: 89119706.3

(22) Anmeldetag: 24.10.89

(51) Int. Cl.5: **G01N 21/53, G01N 21/15**

(30) Priorität: 22.11.88 DE 3839348

(43) Veröffentlichungstag der Anmeldung:
**30.05.90 Patentblatt 90/22**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Grob, Ferdinand**
**Friedrich-Schelling-Weg 8**
**D-7122 Besigheim(DE)**
Erfinder: **Kienzler, Dieter**
**Fuchswaldstrasse 64**
**D-7000 Stuttgart 1(DE)**
Erfinder: **Linder, Ernst**
**Uhlandstrasse 24**
**D-7130 Mühlacker(DE)**
Erfinder: **Potschin, Roger**
**Strombergstrasse 9/1**
**D-7142 Marbach(DE)**
Erfinder: **Stutzenberger, Heinz, Dr.**
**Schwabstrasse 19/2**
**D-7143 Vaihingen/enz(DE)**

(54) **Vorrichtung zur Messung der Partikelbelastung im Rauch- oder Abgas eines Verbrennungsprozesses.**

(57) Eine Vorrichtung zur Messung der Partikelbelastung im Rauch-oder Abgas eines Verbrennungsprozesses weist einen zwischen einem optischen Sender (41) und einem optischen Empfänger (42) ausgesendeten Lichtstrahl auf, der durch zwei einander diametral gegenüberliegende, mit lichtdurchlässigen Körpern (29,30) verschlossene Lichtdurchtrittsöffnungen (16,17) in der Wand eines Abgasrohres (15) hindurchtritt und einen in dem Abgasrohr (15) geführten Abgasstrom durchquert. Die Intensitätsschwächung des Lichtstrahls ist ein Maß für die Partikelbelastung. Bei Verwendung der Meßvorrichtung zur Messung der Rußkonzentration im Abgas von Brennkraftmaschinen von Fahrzeugen wird diese unmittelbar am Auspuffrohr (15) angebracht, und die lichtdurchlässigen Körper (29,30) werden im Bereich der vom Abgasstrom beaufschlagten Flächen auf eine über der Rußabbrandtemperatur liegende Temperatur aufgeheizt. Hierdurch wird eine Meßwertverfälschung durch Rußablagerungen in der Meßstrecke auf den lichtdurchlässigen Körpern (29,30) verhindert und ein kontinuierlicher Betrieb der Meßvorrichtung sichergestellt.

Fig.1

## Vorrichtung zur Messung der Partikelbelastung im Rauch- oder Abgas eines Verbrennungsprozesses

Stand der Technik

Die Erfindung betrifft eine Vorrichtung zur Messung der Partikelbelastung im Rauch- oder Abgas eines Verbrennungsprozesses der im Oberbegriff des Anspruchs 1 definierten Gattung.

Bei einer solchen Meßeinrichtung durchstrahlt das von einem optischen Sender abgestrahlte Licht das Auspuffrohr und wird von einem optischen Empfänger in ein elektrisches Signal umgewandelt. Die im Abgas befindlichen Partikel führen zu einer Verringerung der Lichtmenge, die als Extinktion bzw. Trübung ausgedrückt ein Maß für die Rußemission des Motors ist.

Bei einer bekannten Vorrichtung dieser Art (DE-GM 81 28 634) sind die lichtdurchlässigen Körper durch Fenster realisiert, die jeweils eine in die· Lichtdurchtrittsöffnung eingesetzte Hülse mit Abstand von der Rohrwand des Abgasrohres abschließen. Hierdurch entsteht ein strömungsmäßig toter Raum vor jedem Fenster,·durch welchen es zu erheblichen Partikelablagerungen auf den Fenstern kommt. Um den durch die Verschmutzung der Fenster hervorgerufenen Meßfehler zu eliminieren, ist dem einen Fenster ein vor Verschmutzung in einem Schacht geschützter Retroreflektor zugeordnet, der sich außerhalb des Lichtstrahls befindet. In gewissen Zeitabständen wird der Reflektor kurzfristig in den Strahlengang eingeführt. Er reflektiert dann den durch das Fenster tretenden Lichtstrahl des optischen Senders zurück auf den optischen Empfänger. Dort wird ein Signal gewonnen, welches der durch die Verschmutzung des Fensters hervorgerufenen Transmissionsreduzierung entspricht und welches einen Korrekturwert für die weitere Messung nach Entfernen des Retroreflektors gibt. Eine solche Nachjustierung der Meßeinrichtung ist umständlich und nur für stationäre Verbrennungsanlagen geeignet, nicht jedoch für mobile, z.B. für Brennkraftmaschinen von Kraftfahrzeugen.

Bei mit Kraftstoffeinspritzpumpen ausgerüsteten Brennkraftmaschinen dienen solche Meßvorrichtungen dazu, aus der Rußkonzentration im Abgas eine Regelgröße für die Kraftstoffeinspritzung abzuleiten, mit welcher die Einspritzmenge bei Vollast so dosiert werden kann, daß die maximal vorgegebene Rußemission nicht überschritten wird (US-PS 3 744 461).

Bei einer bekannten Meßvorrichtung für Brennkraftmaschinen (GB-PS 1 334 472) ist ein elektrischer Detektor am Umfang des den Abgasstrom führenden Auspuffrohres installiert, der ein Signal von einem elektrischen Sender empfängt, der ebenfalls am Umfang des Auspuffrohres, dem Detektor direkt gegenüber, angeordnet ist. Die Intensität des von dem Detektor empfangenen Signals wächst an oder nimmt ab - je nach Typ des Detektors -, wenn die Rußkonzentration im Abgasstrom anwächst. Das elektrische Ausgangssignal des Detektors wird verstärkt und bildet ein unmittelbares Steuersignal zur Einstellung eines Ventils. Um Meßverfälschungen infolge von Rußkonzentrationen auf Detektor und Sender möglichst auszuschalten, ist ein Spülluftvorhang zwischen dem Abgas einerseits und den aktiven Elementen von Detektor und Sender andererseits aufgebaut. Trotzdem können Rußablagerungen auf den aktiven Elementen nicht verhindert werden, so daß langfristig eine Meßwertdrift stattfindet.

Vorteile der Erfindung

Die erfindungsgemäße Vorrichtung mit den kennzeichnenden Merkmalen des Anspruchs 1 hat den Vorteil, daß wie bei den Meßvorrichtungen für stationäre Verbrennungsanlagen durch die lichtdurchlässigen Körper unmittelbare Rußablagerungen auf den aktiven Elementen von Sender und Empfänger verhindert werden und daß im Gegensatz zu diesen stationären Verbrennungsanlagen mittels der Heizung die Lichtdurchlässigkeit der Körper durch Vermeiden einer Rußbeschlagung gewährleistet wird. Damit wird verhindert, daß andere Einflüsse außer der Rußkonzentration im Abgas eine meßwertverfälschende Trübung des optischen Empfangssignals hervorrufen. Auf Kalibrierungsmessungen kann verzichtet werden. Der kontinuierliche, unterbrechungsfreie Betrieb ist sichergestellt. Die lichtdurchlässigen Körper können als Scheiben oder Stäbe aus Saphir oder Quarz ausgebildet werden, die in den Keramikkörpern eingesintert, eingeklebt oder verpreßt sind. Das Freihalten der lichtdurchlässigen Körper kann in Einzelfällen, insbesondere bei mit dem Abgasrohr bündigen Scheiben oder Stäben dadurch unterstützt werden, daß gemäß einer Ausführungsform der Erfindung die Körper auf ihrer dem Abgasstrom zugekehrten Oberfläche mit Spülluftpulsen beaufschlagt werden.

Wesentliche Vorteile der Vorrichtung ergeben sich dadurch, daß nach einer bevorzugten Ausführungsform der Erfindung der optische Sender und Empfänger über Lichtleiter an die eine Lichtdurchtrittsöffnung angeschlossen sind, während hinter der anderen Lichtdurchtrittsöffnung eine Reflexionsfläche angeordnet ist, wobei jeweils zwischen Lichtleiter bzw. Reflexionsfläche einerseits und Abgasstrom andererseits sich die lichtdurchlässigen Körper befinden. Durch diese Maßnahmen wird die Länge des den Abgasstrom durchdringenden Lichtstrahls bei unverändertem Durchmesser des Abgasrohres verdoppelt und damit ohne Vergrößerung des Abgasrohres eine höhere Meßgenauigkeit erzielt. Die Reflexionsfläche kann vorteilhaft durch einen Retroreflektor gebildet werden, der von dem geeignet geformten, beheizten Saphir- oder Quarzkörper selbst gebildet wird. Von dem optischen Sender und dem optischen Empfänger ist jeweils ein separater Lichtleiter zu cer einen Lichtdurchtrittsöffnung geführt. Beide Lichtleiter münden in einem gemeinsamen Endstück. Die unerwünschte Reflexion des ausgesandten Lichtes an der dem Senderlichtleiter zugekehrten Seite kann durch Ausbildung des lichtdurchlässigen Körpers als Doppelkonus reduziert werden.

Wird gemäß einer weiteren Ausführungsform der Erfindung das emittierte Licht in einen Meßstrahl und einen Referenzstrahl aufgeteilt, kann in einer Auswerteschaltung die Temperaturdrift, Alterung und andere schädliche Einflüsse einer die Lichtquelle des optischen Senders bildenden Leuchtdiode erfaßt und kompensiert werden. Ordnet man die Referenzdiode in dem Empfänger an, so muß ein dritter Lichtleiter die Referenzdiode an den Sender ankoppeln. Ordnet man die Referenzdiode in einem Seitenkanal hinter der Senderdiode an, kann der dritte Lichtleiter entfallen.

Die vorstehend erwähnten Spülluftpulse werden gemäß einer weiteren Ausführungsform der Erfindung vorteilhaft von einer Membranpumpe zur Verfügung gestellt, die von den Auspuffdruckstößen angetrieben wird. Damit benötigt die Spülluftversorgung keine zusätzliche Energie.

Die Meßvorrichtung kann konstruktiv einfacher und kostengünstig ausgeführt werden, wenn gemäß einer bevorzugten Ausführungsform der Erfindung die Heizwendel unmittelbar auf den als Glasstäbe ausgebildeten lichtdurchlässigen Körpern aufgebracht werden. Dann entfallen die Keramikkörper als Träger für die Heizwendel, was sich in der Reduzierung der Fertigungskosten bemerkbar macht. Die Glasstäbe werden dann bevorzugt aus Quarzglas gefertigt.

Die Ausbildung der lichtdurchlässigen Körper als langgestreckte Glasstäbe macht es auch möglich, gemäß einer vorteilhaften Ausführungsform der Erfindung den Sender und Empfänger unmittelbar am Abgasrohr anzuordnen und dadurch die Lichtleiter einzusparen. Dies reduziert wiederum die Herstellungskosten. Die Unterbringung des optischen Senders und Empfängers auf der gleichen Seite des Abgasrohres und die Anordnung eines Retroreflektors auf der anderen Seite des Abgasrohres ist regelungstechnisch äußerst vorteilhaft und ermöglicht auch eine kompakte Bauform der Meßvorrichtung.

Eine konstruktive Vereinfachung ergibt sich, wenn nach einer weiteren Ausführungsform der Erfindung Leuchtdiode, Fotodiode und Referenz-Fotodiode auf einem gemeinsamen Substrat angeordnet werden. Dabei können die fertigen Dioden auf dem Substrat vergossen oder die Halbleiter auf dem Substrat gebondet werden. Ein Spiegel oder ein Metallplättchen sorgt für Lichtabschirmung zwischen den benachbarten Sender- und Empfängerdioden.

Zeichnung

Die Erfindung ist anhand von in der Zeichnung dargestellten Ausführungsbeispielen in der nachfolgenden Beschreibung näher erläutert. Es zeigen jeweils in schematischer Darstellung:

Fig. 1 einen Motor eines Kraftfahrzeugs mit Auspuffanlage und einer daran angeschlossenen Vorrichtung zur Messung der Rußkonzentration im Abgas,

Fig. 2 abschnittweise ein Auspuffrohr der Auspuffanlage in Fig. 1 mit einer Meßvorrichtung gemäß einem weiteren Ausführungsbeispiel,

Fig. 3 einen Querschnitt des Auspuffrohres der Auspuffanlage eines Kraftfahrzeugs mit einer Meßvorrichtung gemäß einem dritten Ausführungsbeispiel,

Fig. 4 eine vergrößerte Darstellung der optischen Komponenten der Meßvorrichtung in Fig. 3,

Fig. 5 und 6 jeweils eine gleiche Darstellung wie in Fig. 4 einer Meßvorrichtung gemäß einem vierten und fünften Ausführungsbeispiel.

Beschreibung der Ausführungsbeispiele

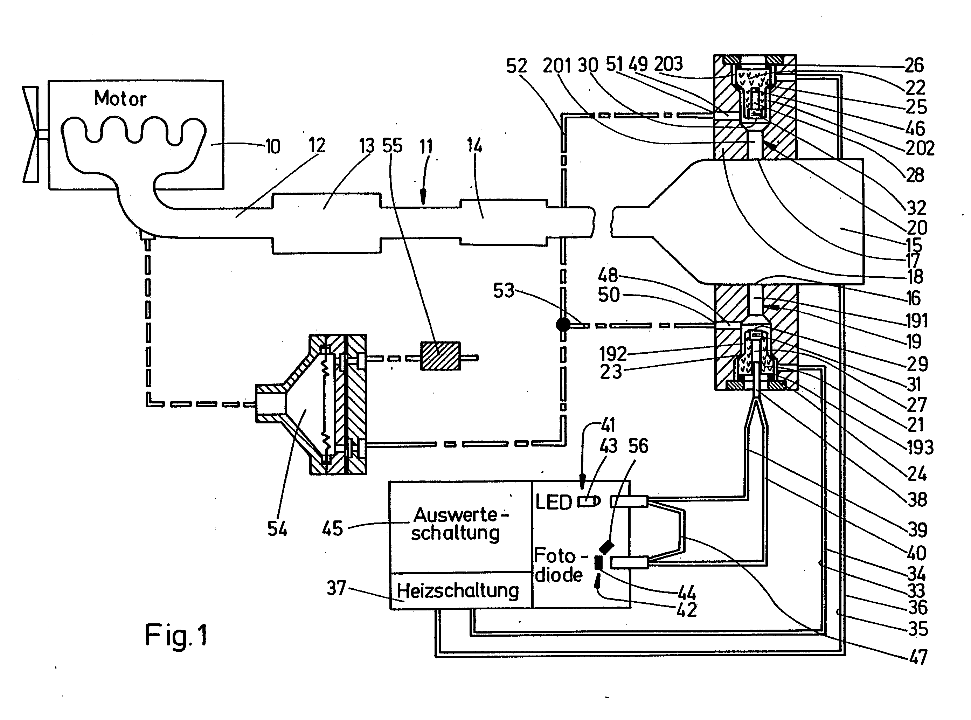

In Fig. 1 ist mit 10 ein Verbrennungsmotor, insbesondere ein Dieselmotor, eines Kraftfahrzeugs als Beispiel einer Brennkraftmaschine und mit 11 die an dem Verbrennungsmotor 10 angeschlossene Auspuffanlage bezeichnet. Diese besteht aus dem Abgasführungsrohr 12, das einen oder zwei Schalldämpfer 13,14 enthält, und aus einem Auspuffendrohr 15. Am Auspuffendrohr 15 ist die Vorrichtung zur Messung der Rußkonzentration in dem das Auspuffendrohr 15 durchströmenden Abgasstrom angeordnet. Hierzu ist die Wandung des Auspuffendrohres 15 mit zwei einander diametral gegenüberliegenden Lichtdurchtrittsöffnungen 16,17 versehen und das Auspuffendrohr 15 im Bereich dieser Lichtdurchtrittsöffnungen 16,17 von einem Anschlußring 18 umgeben, der mit den Lichtdurchtrittsöffnungen 16,17 fluchtende Radialbohrungen 19,20 trägt. Die Radialbohrungen 19,20 sind als Stufenbohrungen ausgeführt, wobei der Bohrungsdurchmesser der einzelnen Bohrungsabschnitte 191 -193 bzw. 201 - 203 vom Auspuffendrohr 15 bis zum Umfang des Anschlußrings 18 hin zunimmt. In die beiden äußeren Bohrungsabschnitte 192,193 bzw. 202 und 203 ist jeweils ein den Konturen der Bohrungsabschnitte 192,193 bzw. 202, 203 angepaßter Keramikkörper 21 bzw. 22 eingesetzt. Der zwischen den Keramikkörpern 21,22 und den Bohrungsabschnitten 192,193 bzw. 202,203 verbleibende Ringspalt ist durch Ringdichtungen 23,24 bzw. 25,26 abgedichtet, so daß kein Abgas aus dem Anschlußring 18 ausströmen kann. Jeder Keramikkörper 21,22 weist eine Axialbohrung auf, die bei dem Keramikkörper 21 als Durchgangsbohrung 27 und bei dem Keramikkörper 28 als Sackbohrung 28 ausgebildet ist. Sowohl die Durchgangsbohrung 27 als auch die Sackbohrung 28 münden an der dem Auspuffendrohr 15 zugekehrten Stirnseite des Keramikkörpers 21 bzw. 22 und sind dort von einer lichtdurchlässigen Scheibe in Form einer in den Keramikkörper 21 bzw. 22 eingesinterten Saphirscheibe 29,30 abgeschlossen. Auf dem Keramikkörper 21 bzw. 22 ist eine Platinheizwendel angeordnet, die schematisch mit 31 bzw. 32 angedeutet und mit zwei Anschlußdrähten 33,34 bzw. 35,36 verbunden ist, die zu einer Heizschaltung 37 führen. Mit diesen Platinheizwendeln 31,32 werden die Saphirscheiben 29,30 auf eine Temperatur aufgeheizt, die oberhalb der Rußabbrenntemperatur liegt, so daß an den Saphirscheiben 29,30 sich kein Ruß mehr niederschlägt und damit die Lichtdurchlässigkeit der Saphirscheiben 29,30 gewährleistet bleibt.

In die Durchgangsbohrung 27 des Keramikkörpers 21 ist ein Lichtleiter-Abschlußstück 38 eingesteckt, in welchem zwei Lichtleiter 39,40 zusammengefaßt sind. Der eine Lichtleiter 39 führt zu einem optischen Sender 41 und der andere Lichtleiter 40 zu einem optischen Empfänger 42. Im optischen Sender 41 ist an dem Lichtleiter 39 eine als Leuchtdiode 43 ausgebildete Lichtquelle angekoppelt. Im optischen Empfänger 42 ist der Lichtleiter 40 mit einem Fotodektor, hier eine einfache Fotodiode 44, optisch gekoppelt. Der Empfänger 42 ist mit einer Auswerteschaltung 45 verbunden, die aus den empfangenen Lichtintensitäten bei getrübter und ungetrübter Durchstrahlung des Auspuffrohres einen Absorptionskoeffizienten K oder die Trübung T errechnet und mit in einem Kennfeld abgelegten drehzahlabhängigen Grenzwerten vergleicht. Die Abweichungen von Sollwerten werden als Stellgrößen zur Korrektur des Mengeneinstellorgans der Kraftstoffeinspritzpumpe verwendet. Das von der Leuchtdiode 43 ausgesandte Licht ist gepulst, wodurch der Einfluß von Streulicht aus der Umgebung und die Wärmestrahlung der heißen Saphirscheiben 29,30 kompensiert wird. Die Wellenlänge des Lichtes liegt vorzugsweise im Infrarotbereich, da einerseits IR-Dioden mit höherer Lichtausbeute verfügbar sind und andererseits bei Infrarotlicht der Einfluß der Partikelgröße im Abgas auf das Meßergebnis geringer ist.

Am Grund der Sackbohrung 28 in dem Keramikkörper 22 ist eine Reflexionsfläche 46 in Form einer Retroreflexfolie angeordnet, so daß das von dem optischen Sender 41 ausgehende Licht, das über den Lichtleiter 39 in den Anschlußring 18 eingeleitet wird, das Auspuffendrohr 15 durchquert, an der Reflexionsfläche 46 reflektiert wird, erneut das Auspuffendrohr 15 durchläuft, um dann über den Lichtleiter 40 dem optischen Empfänger 42 zugeführt zu werden. Dadurch durchquert der Lichtstrahl zweimal den Abgasstrom im Auspuffendrohr 15, wodurch die die Rußkonzentration erfassende Meßstrecke doppelt so groß ist wie der Durchmesser des Auspuffendrohrs 15. Ein dritter Lichtleiter 47 führt unmittelbar von dem Sender 41 zu dem Empfänger 42 und beaufschlagt dort eine Referenzdiode 56. Durch diese Anordnung wird das von der Leuchtdiode 43 ausgehende Licht in einen über den Lichtleiter 39 ausgesendeten Meßstrahl und in einen über den Lichtleiter 47 ausgesendeten Referenzstrahl geteilt. Dadurch können in einfacher Weise Intensitätsschwankungen der Leuchtdiode 43 in der Auswerteschaltung 45 kompensiert werden.

In dem Anschlußring 18 sind zwei rechtwinklig zu den Radialbohrungen 19,20 verlaufende Axialbohrungen 48,49 eingebracht, die jeweils in einer der Radialbohrungen 19,20 münden, und zwar im Bereich des zweiten Bohrungsabschnittes 192 bzw. 202. Die Axialbohrungen 48,49 sind mit einem Spülluftanschluß 50 bzw. 51 versehen, die über Spülluftleitungen 52,53 mit einer Membranpumpe 54 verbunden sind. Die im Aufbau an sich bekannte Membranpumpe 54 ist mit dem Abgasführungsrohr 12 verbunden und wird von den Auspuffdruckstößen angetrieben. Die über einen Luftfilter 55 angesaugte Luft wird als Druckimpulse über die Spülluftleitungen 52,53 in die Bohrungsabschnitte 192 und 202 eingedrückt und beaufschlagt dort die Saphirscheiben 29,30. Damit wird ein zusätzlicher Reinigungseffekt der Saphirscheiben 29,30 erreicht. Die Spülluft wird über die Bohrungsabschnitte 191 und 201 dem Auspuffendrohr 15 zu- und dort mit dem Abgasstrom abgeführt.

Die vorstehend beschriebene Meßvorrichtung für die Rußkonzentration im Abgas der Brennkraftmaschine arbeitet wie folgt:

Von der Leuchtdiode 43 wird Licht mit einer definierten Lichtintensität $\phi^*$ abgestrahlt. Der Lichtstrahl tritt am Abschlußstück 38 des Lichtleiters 39 aus, durch die Lichtdurchtrittsöffnung 16 hindurch, durchquert den Abgasstrom und fällt durch die Lichtdurchtrittsöffnung 17 auf die Reflexionsfläche 46. Dort wird der Lichtstrahl reflektiert und gelangt auf dem umgekehrten Weg zurück zu dem Abschlußstück 38, von wo aus er über den Lichtleiter 40 zu der Fotodiode 44 des optischen Empfängers gelangt. Nach seinem zweimaligen Durchtritt durch den Abgasstrom wird der Lichtstrahl in der Fotodiode 44 bei reinem Abgas mit einer Intensität $\phi_0$ und bei einer vorhandenen Rußkonzentration mehr oder weniger getrübt mit einer Intensität $\phi$ registriert. Die Intensität $\phi$ hängt über das Beer-Lambert'sche Gesetz von der Länge der Meßstrecke L, hier von dem doppelten Durchmesser des Abgasrohres, von den Absorptionseigenschaften K des Abgasstromes und von der Empfangsintensität $\phi_0$ des Lichtes bei reinem Abgas ab, gemäß

$$\phi = \phi_0 \cdot e^{-K \cdot L}.$$

In der Auswerteschaltung wird aus der bekannten Empfangsintensität $\phi_0$ des Lichtstrahles bei reinem Abgas und der an der Fotodiode 44 gemessenen Lichtintensität $\phi$ der Absorptionskoeffizient K oder die Trübung T berechnet gemäß

$$T = 1 - \frac{\phi}{\phi_0} = 1 - e^{-K \cdot L}.$$

Die Trübung T wird mit in einem Kennfeld abgelegten, drehzahlabhängigen Grenzwerten verglichen. Istwertabweichungen werden durch Verschieben der Regelstange der Kraftstoffeinspritzpumpe ausgeglichen, indem diese die Kraftstoffeinspritzmenge verändert. Durch die Beheizung und Spülluftbeaufschlagung der Saphirscheiben 29,30 werden die optischen Systeme gegen Verschmutzung geschützt, so daß keine Meßwertverfälschungen auftreten.

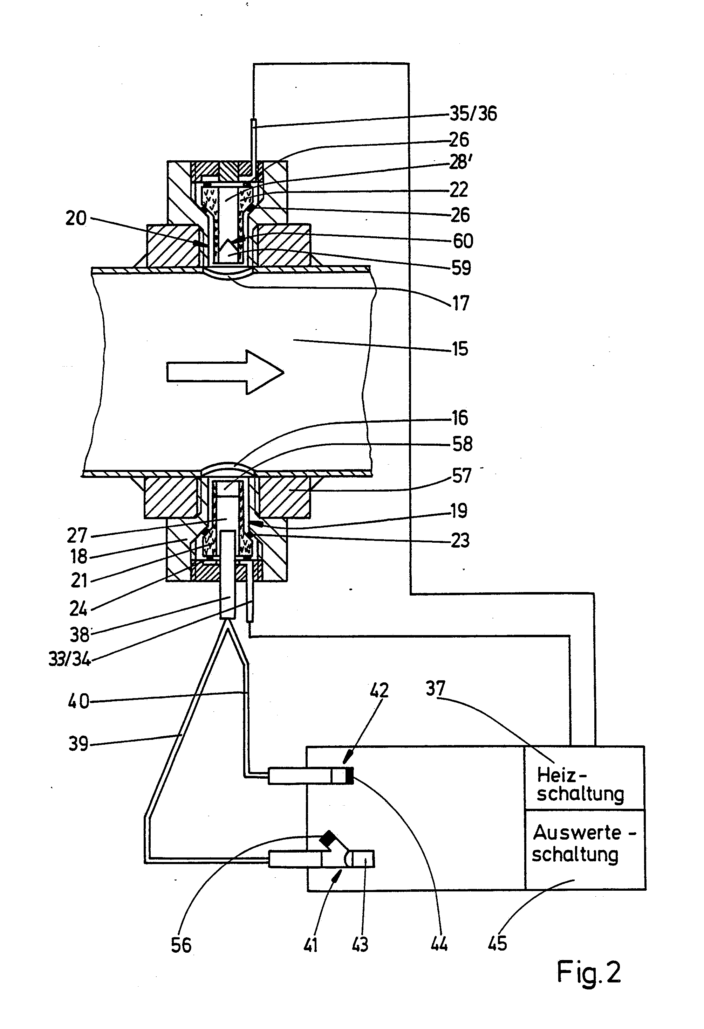

Die in Fig. 2 skizzierte Meßvorrichtung stimmt prinzipiell mit der vorstehend beschriebenen überein, nur sind hier einige vorteilhafte Modifikationen vorgenommen. So ist der Anschlußring 18 mittels eines Ringträgers oder Aufschweißstopfens 57 an dem Auspuffendrohr 15 befestigt. Die Keramikkörper 21,22 sind so in die Radialbohrungen 19,20 des Anschlußrings 18 eingesetzt, daß die lichtdurchlässigen Körper die Lichtdurchtrittsöffnungen 16,17 zum Innern des Auspuffendrohrs 15 hin bündig abschließen. Die Luftbespülung ist gänzlich entfallen. Die ebenfalls beheizten lichtdurchlässigen Körper sind hier als Saphirscheiben 58, 59 ausgebildet, wobei die im Keramikkörper 21 angeordnete Saphirscheibe 58 als Doppelkonus ausgearbeitet sein kann, um unerwünschte Reflexionen an der am Senderlichtleiter 39 zugekehrten Seite zu verringern. Die andere Saphirscheibe 59 im Keramikkörper 22 ist als Retroreflektor 60 ausgebildet, der die Funktion der Reflexionsfläche 46 in Fig. 1 übernimmt. Zur fertigungstechnischen Vereinfachung ist die Axialbohrung im Keramikkörper 22 nicht als Sackbohrung sondern als Durchgangsbohrung 28' ausgebildet.

Die Referenzdiode 56 ist nicht im Empfänger 42 sondern im Sender 41 angeordnet, und zwar in einem Seitenkanal in Senderichtung gesehen hinter der Leuchtdiode 43, so daß sie ebenfalls von einem Teil des Senderlichtes beaufschlagt wird. Die Referenzdiode 56 ist nach wie vor mit der Auswerteschaltung 45 verbunden. Ihre Aufgabe ist dieselbe, nur wird der in Fig. 1 vorhandene dritte Lichtleiter 47 eingespart.

Anstelle der Saphirstäbe oder der Saphirscheiben können auch Quarzstäbe oder Quarzscheiben verwendet werden.

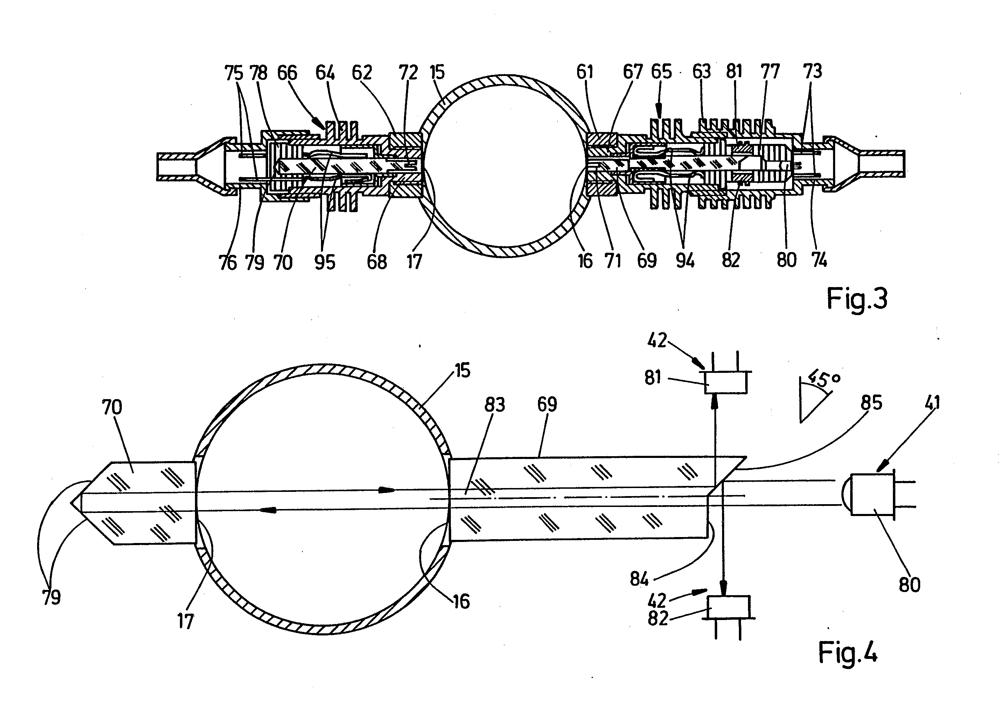

Die in Fig. 3 im Querschnitt dargestellte Meßvorrichtung hat eine kompakte Bauform und ist unmittelbar am Auspuffendrohr 15 der Auspuffanlage der Brennkraftmaschine angeordnet. An das Auspuffendrohr 15 sind zwei radial wegstehende Anschlußstutzen 61,62 angeschweißt, die zwei diametrale Durchbrüche in der Rohrwandung umschließen. In jedem Anschlußstutzen 61,62 ist ein mit Kühlrippen 63 bzw. 64 versehenes Gehäuse 65 bzw. 66 mit einem axial vorstehenden hohlzylindrischen Anschlußzapfen 67 bzw. 68 eingeschraubt. Die lichten Öffnungen der Anschlußzapfen 67,68 bilden die Lichtdurchtrittsöffnungen 16,17, die bündig mit den lichtdurchlässigen Körpern, die hier als langgestreckte Glasstäbe 69,70 ausgebildet sind, abgeschlossen sind. Die sich axial durch jedes Gehäuse 65,66 erstreckenden, aus Quarzglas bestehenden Glasstäbe 69,70 tragen auf ihrem vorderen Umfangsabschnitt eine Heizwendel 71 bzw. 72. Jede Heizwendel 71,72 ist unmittelbar auf dem Glasstab 69,70 aufgebracht und gegenüber dem Gehäuse 65 bzw. 66 isoliert. Die Kontaktierung der Heizwendeln 71, 72 erfolgt über Federklemmen 94, 95, die sich auf den Heizwendelenden aufpressen und durchgehend nach hinten geführt sind.

Die Glasstäbe 69,70 sind jeweils längs des von den Lichtdurchtrittsöffnungen 16,17 abgekehrten Endabschnitts in einer axialen Ausnehmung eines aus Teflonscheiben bestehenden Isolierblocks 77 bzw. 78 mit Abstand vom Gehäuse 64,65 gehalten. Während der Glasstab 70 endseitig mit einer Retroreflexionsfläche 79 versehen ist, die vorzugsweise mit dem Glasstab 70 zu einem einstückigen Retroreflektor mit kreisförmigem oder rechteckförmigem Querschnitt zusammengefügt ist, ist der Glasstab 69 prismenartig mit rechteckiger Querschnittsfläche als Strahlenteiler ausgebildet. An seinem von der Lichtdurchtrittsöffnung 16 abgekehrten Ende sind die Leuchtdiode 80 des optischen Senders 41, die Fotodiode 81 und die Referenz-Fotodiode 82 des optischen Empfängers 42 angeordnet. Sie sind in entsprechenden Bohrungen des Isolierblocks 77 so eingepaßt, daß die Senderichtung der Leuchtdiode 80 mit der Stabachse 83 des Glasstabes 69 fluchtet und die Empfangsrichtungen von Leuchtdiode 80 und Fotodiode 81 rechtwinklig zur Stabachse 83 ausgerichtet sind.

Wie in der vergrößerten Darstellung der optischen Komponenten in Fig. 4 besser zu sehen ist, ist die von der Lichtdurchtrittsöffnung 16 abgekehrte Stirnfläche des Glasstabes 69 in eine bis etwa zur Stabachse 83 reichende Lichteintrittsfläche 84, die rechtwinklig zur Stabachse 83 verläuft, und in eine unter einem Winkel von 45° zur Stabachse 83 verlaufende Reflexionfläche 85 unterteilt.

Fotodiode 81 und Referenz-Fotodiode 82 liegen einander am Glasstab 69 gegenüber, so daß sie der Vorder- bzw. Rückseite der Reflexionsfläche 85 zugekehrt sind. Die Fotodiode 81 ist dabei so angeordnet, daß das vom Retroreflektor 70,79 reflektierte Licht zumindest teilweise von der Reflexionsfläche 85 auf sie umgelenkt wird, während die Referenz-Fotodiode 82 von einem Teil des von der Reflexionsfläche 85 reflektierten Sendelichtes der Leuchtdiode 80 beleuchtet wird. In Fig. 4 ist der Strahlenverlauf des Lichtes schematisch eingezeichnet. Die Stirnfläche des Glasstabes 69 wird von der Leuchtdiode 80 beleuchtet. Ein Teil des Lichtes wird von der Reflexionsfläche 85 auf die Referenz-Fotodiode 82 reflektiert. Der andere Teil des Lichtes tritt über die Lichteintrittsfläche 84 in den Glasstab 69 ein, durchläuft diesen ebenso wie den Abgasstrom im Auspuffendrohr 15 und den Glasstab 70, wird an der Retroreflexionsfläche 79 des Glasstabes 70 um 180° zurückgeworfen, durchläuft wiederum den Glasstab 70, den Abgasstrom und den Glasstab 69 und wird von der Reflexionsfläche 85 zur Fotodiode 81 hin reflektiert, wo in der vorstehend beschriebenen Weise die Lichtintensität gemessen wird.

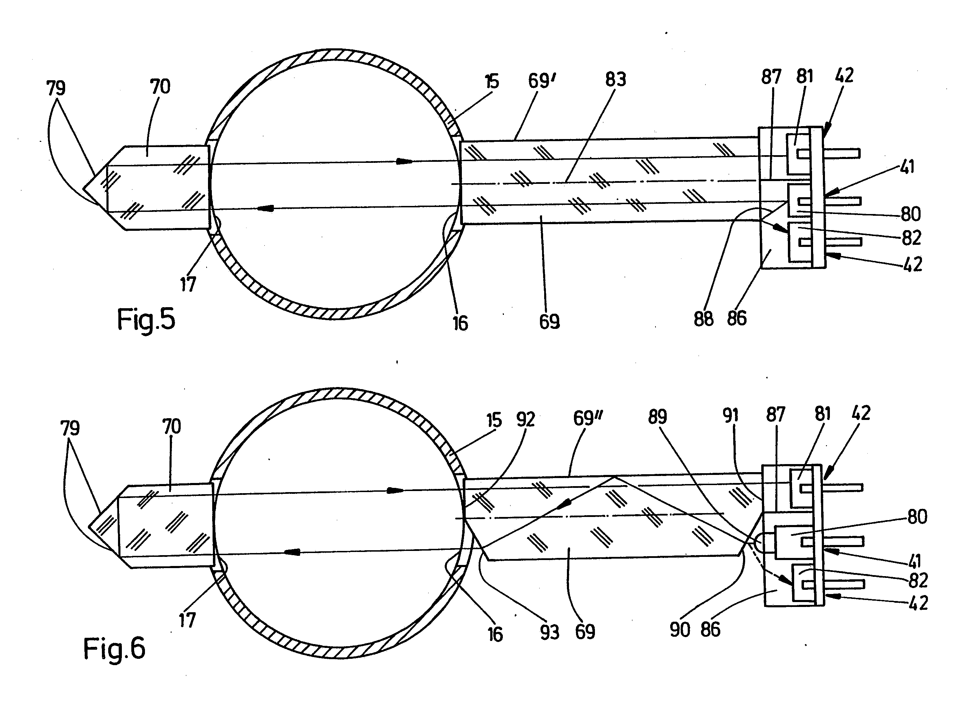

In den in Fig. 5 und 6 dargestellten Ausführungsbeispielen der Meßvorrichtung ist die optische Komponente auf der Sender- und Empfängerseite modifiziert. Die Leuchtdiode 80 des optischen Senders 41 sowie die Fotodiode 81 und die Referenz-Fotodiodoe 82 sind auf einem gemeinsamen Substrat 86 angeordnet. Dies kann durch gemeinsames Vergießen der bereits gefertigten Dioden 80 - 82 auf dem Substrat 86 oder durch Bonden der Halbleiter auf dem Substrat 86 realisiert werden. Zwischen der Fotodiode 81 und der Leuchtdiode 80 ist zur Lichtabschirmung ein Metallplättchen 87 angeordnet. Die von der Lichtdurchtrittsöffnung 16 abgekehrte Stirnfläche des Glasstabes 69' ist eben ausgebildet. Das Substrat 86 ist unmittelbar auf die Stirnfläche aufgesetzt, wobei die Stirnfläche den von Fotodiode 81 und Leuchtdiode 80 belegten Bereich des Substrats 86 überdeckt. Der Bereich des Substrats 86, der die neben der Leuchtdiode 80 angeordnete Referenz-Fotodiode 82 enthält, steht über den Glasstab 69' über. Der in Fig. 5 mit Pfeilen angedeutete Strahlenverlauf ist wiederum so, daß ein Teil des von der Leuchtdiode 80 ausgesendeten Lichtes an der Grenzfläche zwischen den zwei optischen Medien reflektiert wird und auf die Referenz-Fotodiode 82 trifft, während der übrige Teil des Lichtes nach zweimaligem Durchlaufen der Glasstäbe 69',70 und des Abgasstromes an die Fotodiode 81 gelangt.

Die Ausführungsform der Meßvorrichtungen in Fig. 6 unterscheidet sich von der in Fig. 5 durch eine modifizierte Formgebung des Glasstabes 69". Leuchtdiode 80, Fotodiode 81 und Referenz-Fotodiode 82 sind wiederum in einem gemeinsamen Substrat 86 untergebracht, wobei in gleicher Weise die Leuchtdiode 80 von Fotodiode 81 und Referenz-Fotodiode 82 flankiert wird. Die Fotodiode 81 ist durch das Metallplättchen 87 von der Leuchtdiode 80 abgeschirmt. Das Substrat 86 ist wiederum unmittelbar auf die Stirnfläche des Glasstabes 69" aufgesetzt und erstreckt sich mit etwa zwei Drittel seiner Gesamtfläche über die Stirnfläche des Glasstabes 69. Der Leuchtdiode 80 liegt ein Flächenabschnitt 90 der Stirnfläche des Glasstabes 69" gegenüber, der etwa bis zur Stabachse 83 reicht und gegenüber der Stabachse 83 um einen spitzen Winkel geneigt ist. Dieser Neigungswinkel ist so eingestellt, daß ein Teil des Lichtes von dem Flächenabschnitt 90 zu der Referenz-Fotodiode 82 reflektiert wird, während der größere Teil des Lichtes unter einem kleinen Einfallswinkel in den Glasstab 69 eintritt. Der verbleibende Flächenabschnitt 91 der Stirnfläche erstreckt sich nach wie vor rechtwinklig zur Stabachse 83 und liegt unmittelbar an dem von der Fotodiode 81 überdeckten Bereich des Substrats 86 an.

Auch die an der Lichtdurchtrittsöffnung liegende Stirnfläche des Glasstabes 69" ist in zwei Flächenabschnitte 92 und 93 unterteilt. Jeder Flächenabschnitt 92,93 reicht dabei bis zur Stabachse 83. Der Flächenabschnitt 92 liegt dabei dem Flächenabschnitt 91 der anderen Stirnfläche gegenüber und verläuft parallel zu diesem, d.h. rechtwinklig zur Stabachse 83. Der Flächenabschnitt 93 ist wiederum unter einem spitzen Winkel zur Stabachse 83 geneigt, wobei der Neigungswinkel gegensinnig zum Neigungswinkel des gegenüberliegenden Flächenabschnittes 90, vom Betrag her aber gleich ist. Dadurch verläuft das am Flächenabschnitt 93 aus dem Glasstab 69" austretende Licht wiederum parallel zur Stabachse 83,durchdringt den Abgasstrom im Auspuffrohr 15 und tritt etwa parallel zur Stabachse des Glasstabes 70 in diesen ein. Nach Reflexion an der Retroreflexionsfläche 79 durchläuft der jeweils zweimal um 90° umgelenkte Lichtstrahl die Glasstäbe 69",70 parallel zu deren Achsen und gelangt schließlich an die Fotodiode 81. Der Strahlenverlauf ist in Fig. 6 durch Pfeile kenntlich gemacht.

**Ansprüche**

1. Vorrichtung zur Messung der Partikelbelastung im Rauch-oder Abgas eines Verbrennungsprozesses mit einem von einem eine Lichtquelle enthaltenden optischen Sender zu einem als Fotodetektor ausgebildeten optischen Empfänger ausgesendeten Lichtstrahl, der durch zwei einander diametral gegenüberliegende, mit jeweils einem lichtdurchlässigen Körper verschlossene Lichtdurchtrittsöffnungen in der Wand eines Abgasrohres hindurchtritt und einen in dem Abgasrohr geführten Abgasstrom durchquert, gekennzeichnet durch die Anbringung am Abgasrohr (15) einer Brennkraftmaschine von Fahrzeugen und dadurch, daß zumindest die vom Abgasstrom beaufschlagten Flächen der lichtdurchlässigen Körper (29,50;58,59;69,70) auf eine über der Rußabbrandtemperatur liegende Temperatur aufgeheizt sind.

2. Vorrichtung nach Anspruch 1, dadurch gekennzeichnet, daß das Abgasrohr (15) im Bereich der Lichtdurchtrittsöffnungen (16,17) von einem vorzugsweise ringförmigen Anschlußglied (18) umschlossen ist, das mit den Lichtdurchtrittsöffnungen (16,17) fluchtende Radialbohrungen (19,20) trägt, in welchen jeweils ein einen lichtdurchlässigen Körper (29,30;58,59) aufnehmender Keramikkörper (21,22), die Radialbohrung (19,20) nach außen gasdicht abschließend, eingesetzt ist.

3. Vorrichtung nach Anspruch 2, dadurch gekennzeichnet, daß jeder Keramikkörper (21,22) eine Axialbohrung (27,28) aufweist, die auf ihrem der Lichtdurchtrittsöffnung (16,17) zugekehrten Ende von den lichtdurchlässigen Körpern (29,30;58,59) abgeschlossen ist und an deren anderem Ende der Lichtstrahl ein- und/oder austritt.

4. Vorrichtung nach Anspruch 3, dadurch gekennzeichnet, daß die Axialbohrung des einen Keramikkörpers (21) eine Durchgangsbohrung (27) ist, in welcher das gemeinsame Ende (38) zweier einerseits zum optischen Sender (41) und andererseits zum optischen Empfänger (42) führender Lichtleiter (39,40) eingesteckt ist, und daß in der Axialbohrung (28) des anderen Keramikkörpers (22) eine Reflexionsfläche (46) angeordnet ist, die vorzugsweise von einem in die Axialbohrung (28) eingesetzten Retroreflektor (60) gebildet ist.

5. Vorrichtung nach Anspruch 4, dadurch gekennzeichnet, daß im optischen Empfänger (42) oder im optischen Sender (41) eine Referenzdiode (56) vorgesehen ist, welche mit einem Teil des Senderlichtes beaufschlagt ist.

6. Vorrichtung nach einem der Ansprüche 1 - 5, dadurch gekennzeichnet, daß die Lichtquelle eine Leuchtdiode (43) ist, die vorzugsweise Lichtimpulse aussendet.

7. Vorrichtung nach einem der Ansprüche 1 - 6, dadurch gekennzeichnet, daß die lichtdurchlässigen Körper als in einem Keramikkörper (21,22) eingesinterte, eingeklebte oder verpreßte Scheiben (29,30) oder Stäbe (58,59) aus Saphir oder Quarz ausgebildet sind und daß auf dem Keramikkörper (21,22) eine Platinheizwendel (31,32) angeordnet ist.

8. Vorrichtung nach einem der Ansprüche 1 - 7, dadurch gekennzeichnet, daß die Scheiben (29,30) auf der den Abgasstrom zugekehrten Scheibenfläche mit Spülluft, vorzugsweise intermittierend, beaufschlagt sind.

9. Vorrichtung nach Anspruch 8, dadurch gekennzeichnet, daß die Spülluft parallel zur Scheibenfläche zugeführt wird.

10. Vorrichtung nach Anspruch 8 oder 9, dadurch gekennzeichnet, daß zur Spüllufterzeugung eine von den Abgasdruckstößen angetriebene Membranpumpe (54) vorgesehen ist.

11. Vorrichtung nach einem der Ansprüche 3 - 10, dadurch gekennzeichnet, daß in dem Anschlußglied (18) rechtwinklig zu den Radialbohrungen (19,20) verlaufende Axialbohrungen (48,49) eingebracht sind, die jeweils in einer der Radialbohrungen (19,20) münden und mit einem Spülluftanschluß (50,51) versehen sind.

12. Vorrichtung nach Anspruch 1, dadurch gekennzeichnet, daß die lichtdurchlässigen Körper als Glasstäbe (69,70), vorzugsweise aus Quarzglas, ausgebildet sind, die jeweils auf ihrem vorderen Umfangsabschnitt eine Heizwendel (71,72), vorzugsweise aus Gold , tragen.

13. Vorrichtung nach Anspruch 12, dadurch gekennzeichnet, daß die Glasstäbe (69,70) die Lichtdurchtrittsöffnungen (16,17) an der Innenwand des Abgasrohres (15) nahezu bündig abschließen.

14. Vorrichtung nach Anspruch 13, dadurch gekennzeichnet, daß an dem einen ersten Glasstab (69) unmittelbar die als Leuchtdiode (80) ausgebildete Lichtquelle des optischen Senders (41) und die Fotodiode (81) des optischen Empfängers (42) und an dem von der Lichtdurchtrittsöffnung (17) abgekehrten Stirnende des koaxial zu dem ersten Glasstab (69) ausgerichteten zweiten Glasstabs (70) eine Retroreflexionsfläche (79) angeordnet ist und daß der erste Glasstab (69) prismenartig als Strahlenteiler derart ausgebildet ist, daß das von der Retroreflexionsfläche (79) reflektierte Senderlicht mindestens teilweise im ersten Glasstab (69) zur Fotodiode (81) hin umgelenkt wird.

15. Vorrichtung nach Anspruch 14, dadurch gekennzeichnet, daß der zweite Glasstab (70) und die Retroreflexionsfläche (79) zu einem einstückigen Retroreflektor mit rechteckiger oder kreisförmiger Querschnittsfläche zusammengefaßt sind.

16. Vorrichtung nach Anspruch 14 oder 15, dadurch gekennzeichnet, daß der optische Empfänger (42) eine Referenz-Fotodiode (82) aufweist, die unmittelbar am ersten Glasstab (69) derart angeordnet ist, daß sie mit einem Teil des von der Leuchtdiode (80) ausgehenden Senderlichts beaufschlagt ist.

17. Vorrichtung nach Anspruch 16, dadurch gekennzeichnet, 30 daß der erste Glasstab (69) an seinem von der Lichtdurchtrittsöffnung (16) abgekehrten Stirnende eine etwa bis zur Stabachse (83) reichende und dazu quer verlaufende Lichteintrittsfläche (84) und eine etwa bis zur Stabachse (83) reichende und dazu unter einem Winkel von 45° verlaufende Reflexionsfläche (85) aufweist und daß nahe diesem Stirnende die Leuchtdiode (80) mit mit der Stabachse (83) fluchtender Senderichtung und die Fotodiode (81) und die Referenz-Fotodiode (82) mit jeweils zur Stabachse (83) rechtwinkliger Empfangsrichtung angeordnet sind, wobei die Fotodiode (81) und die Referenz-Fotodiode (82) am ersten Glasstab (69) einander derart gegenüberliegen, daß sie der Vorder- bzw. Rückseite der Reflexionsfläche (85) zugekehrt sind.

18. Vorrichtung nach Anspruch 16, dadurch gekennzeichnet, daß die Leuchtdiode (80), die Fotodiode (81) und die Referenz-Fotodiode (82) mit parallelen Sende- bzw. Empfangsrichtungen auf einem Substrat (86) angeordnet sind, wobei die Leuchtdiode (80) zwischen Fotodiode (81) und Referenz-Fotodiode (82) liegt, und daß zwischen Leuchtdiode (80) und Fotodiode (81) eine Lichtabschirmung, vorzugsweise ein Metallplättchen (87), vorgesehen ist.

19. Vorrichtung nach Anspruch 18, dadurch gekennzeichnet, daß die von der Lichtdurchtrittsöffnung (16) abgekehrte Stirnfläche des ersten Glasstabes (69″) einen bis etwa zur Stabachse (83) reichenden und dazu rechtwinkligen ersten Flächenabschnitt (91), der von der Fotodiode (81) unmittelbar überdeckt ist, und einen bis etwa zur Stabachse (83) reichenden und dazu unter einem spitzen Winkel geneigten zweiten Flächenabschnitt (90), der von der Leuchtdiode (80) beleuchtet wird, aufweist, wobei der Neigungswinkel des zweiten Flächenabschnittes (90) derart eingestellt ist, daß ein Teil des auf den zweiten Flächenabschnitt (90) fallenden Lichtes zur Referenz-Fotodiode (82) hin reflektiert wird und daß die an der Lichtdurchtrittsöffnung (16) liegende Stirnfläche des ersten Glasstabes (69″) einen bis etwa zur Stabachse (83) reichenden und zu dem ersten Flächenabschnitt (91) der anderen Stirnfläche gegenüberliegend parallel verlaufenden ersten Flächenabschnitt (92) und einen bis etwa zur Stabachse (83) reichenden und dazu unter einem spitzen Winkel verlaufenden zweiten Flächenabschnitt (93) aufweist, dessen Neigungswinkel zwar gegensinnig aber vom Betrag her gleich dem des gegenüberliegenden Flächenabschnittes (90) ist, so daß das an ihm austretende Sendelicht parallel zur Stabachse (83) der Glasstäbe (69″, 70) verläuft.

20. Vorrichtung nach einem der Ansprüche 15 - 19, dadurch gekennzeichnet, daß die Lichtdurchtrittsöffnungen (16,17) von jeweils einem am Abgasrohr (15) verschweißten Anschlußstutzen (61,62) koaxial umschlossen sind, daß in jedem Anschlußstutzen (61,62) ein mit einem hohlzylindrischen Anschlußzapfen (67,68) versehenes Gehäuse (65,66) gasdicht eingesetzt, vorzugsweise verschraubt, ist, daß in dem einen Gehäuse (65) der erste Glasstab (69) mit Heizwendel (71) unter bündigem Abschluß der Zapfenöffnung und die Leuchtdiode (80), die Fotodiode (81) und die Referenz-Fotodiode (82) angeordnet sind und daß in dem anderen Gehäuse (66) der als Retroreflektor (70,79) ausgebildete zweite Glasstab (70) mit Heizwendel (72) unter bündigem Abschluß der Zapfenöffnung angeordnet ist.

21. Vorrichtung nach Anspruch 20, dadurch gekennzeichnet, daß die auf den Glasstäben (69,70) angeordneten Heizwendel (71,72) gegenüber dem Gehäuse (65,66) isoliert und mit aus dem Gehäuse herausgeführten Klemmanschlüssen (94) elektrisch leitend kontaktierbar sind.

22. Vorrichtung nach Anspruch 20 oder 21, dadurch gekennzeichnet, daß die Gehäuse (65,66) radial wegstehende Kühlrippen (63,64) tragen.

Fig. 1

EP 0 370 248 A1

21530IF

35/36
26
28'
22
26
60
59
17

20

15

16
58
57
19
23

27
18
21
24
38
33/34

40
39

42    37

56

Heizschaltung

Auswerteschaltung

41  43  44  45

Fig.2

Fig.3

Fig.4

EP 0 370 248 A1

EP 0 370 248 A1

79 70 15 69' 83 87 81 42

41

80

82

42

17 16 69 88 86

**Fig.5**

79 70 15 92 69'' 89 91 87 81 42

80

41

82

42

17 16 93 69 90 86

**Fig.6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION· DER ANMELDUNG (Int. Cl.5) |
|---|---|---|---|
| P,X | DE-A-3 839 348 (BOSCH GMBH) * ganzes Dokument * --- | 1-22 | G 01 N 21/53 G 01 N 21/15 |
| X | PATENT ABSTRACTS OF JAPAN Band 9, Nr. 190 (P-378)(1913), 7. August 1985; & JP - A - 60 058 531 (NIPPON TOKUSHU TOGYO K.K.) 04.04.1985 | 1,7 | |
| Y | idem | 2-4 | |
| A | idem --- | 12 | |
| X | PATENT ABSTRACTS OF JAPAN Band 8, no. 215 (P-305)(1652), 2. Oktober 1984; & JP - A - 59 100 841 (NISSAN JIDOSHA) 11.06.1984 | 1 | |
| Y | idem | 2-4 | |
| A | idem --- | 7 | |
| A | PATENT ABSTRACTS OF JAPAN Band 8, Nr. 215 (P-305)(1652), 2. Oktober 1984; & JP - A - 59 100 840 (NISSAN JIDOSHA) 11.06.1984 --- | 1-4 | **RECHERCHIERTE SACHGEBIETE (Int. Cl.5)** G 01 N |
| A | DE-C-3 525 755 (FRAUNHOFER-GESELLSCHAFT ZUR FOERDERUNG DER ANGEWANDTEN FORSCHUNG) * Zusammenfassung; Ansprüche; Figur 1 * --- | 1,5,12, 13 | |
| A | DE-A-2 907 137 (LESLIE HARTRIDGE LTD.) * ganzes Dokument * --- | 1,8-11 | |
| A | DE-A-3 151 504 (MERCK PATENT GMBH) * Zusammenfassung; Ansprüche; Figur 1 * --- -/- | 1,12,14 ,18 | |

Der vorliegende Recherchenbericht wurde für alle Patentansprüche erstellt

| Recherchenort | Abschlußdatum der Recherche | Prüfer |
|---|---|---|
| BERLIN | 12-02-1990 | JOHNSON K M |

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-U-8 128 634  (SIEMENS AG) <br> * Ansprüche; Figur 1 * <br> ----- | 1 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| BERLIN | 12-02-1990 | JOHNSON K M |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
     Dokument

EPO FORM 1503 03.82 (P0403)